# FASCICULE DE BREVET EUROPEEN

(11) **EP 3 812 165 B1**
(45) Date de publication et mention de la délivrance du brevet: **09.02.2022**
(21) Numéro de dépôt: 20315429.9
(22) Date de dépôt: 08.10.2020
(51) Int. Cl.: B60B 33/00

(54) **ROULETTE AVEC BLOCAGE COMMANDABLE**
ROLLE MIT STEUERBARER BLOCKIERUNG
CASTOR WITH CONTROLLABLE LOCKING

(30) Priorité: 24.10.2019 FR 1911892
(43) Date de publication de la demande: 28.04.2021
(73) Titulaire: TENTE ROULETTES POLYMERES-BRUANDET, 39700 La Barre (FR)
(72) Inventeur: Dayt, Patrick, 25000 Besancon (FR); Moya, Jean-Yves, 25170 Lavernay (FR)
(74) Mandataire: Flavenot, Bernard

(56) Documents cités:
- DE-U1-202014 003 033
- GB-A- 2 384 175
- US-A1- 2004 112 101
- US-A1- 2014 069 749

## Description

### Domaine technique

La présente invention concerne les roulettes comportant au moins une roue et un carter, avec blocage commandable de la roue par rapport au carter, ces roulettes trouvant une application particulièrement avantageuse pour le déplacement et la stabilisation de meubles.

On connaît déjà de telles roulettes, comme celles qui sont décrites et illustrées dans le US2004/112101, mais aussi dans les FR2964598, FR3004992 et FR3003802 déposés au nom de la Demanderesse, qui donnent toute satisfaction sur le plan de leur fonctionnement et de leur utilisation, mais qui peuvent malgré tout présenter des inconvénients notamment sur le plan de leur fabrication qui est relativement complexe et qui confère donc à ces roulettes un prix de revient relativement élevé. Aussi, la présente invention a-t-elle pour but de réaliser une roulette à blocage commandable, qui tente de palier en grande partie l'inconvénient souligné ci-dessus des roulettes similaires de l'art antérieur, tout en présentant d'autres avantages, notamment un encombrement réduit et une structure très simple qui lui permet d'être facilement assemblée, et même de façon automatisée.

### Définition de l'invention

Plus précisément, la présente invention a pour objet une roulette à blocage commandable telle que définie selon au moins l'une des revendications annexées.

### Brève Description des dessins

D'autres caractéristiques et avantages de la présente invention apparaîtront au cours de la description suivante donnée en regard des dessins annexés à titre illustratif, mais nullement limitatif, dans lesquels :

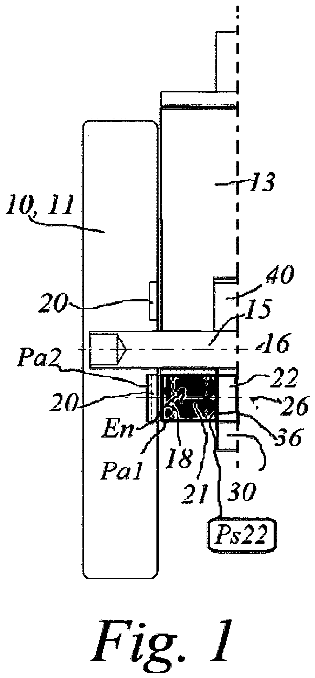

- La figure 1 représente un schéma de principe de la roulette selon l'invention, selon une représentation d'une demi-roulette à deux roues, mais qui peut même représenter une roulette à une seule roue, et

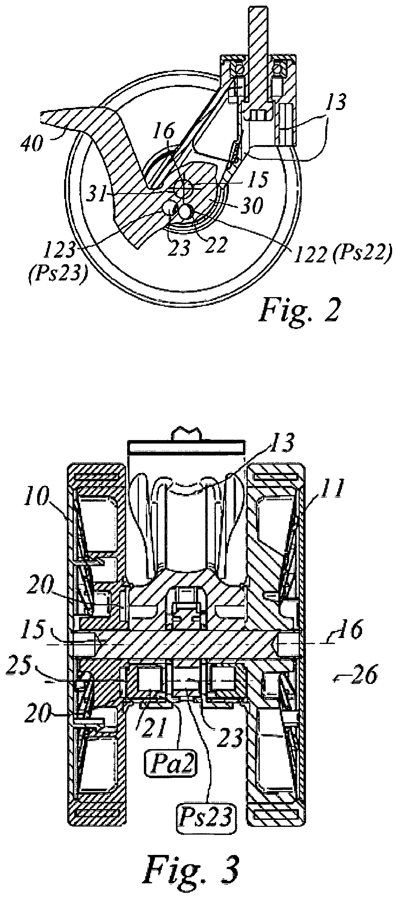

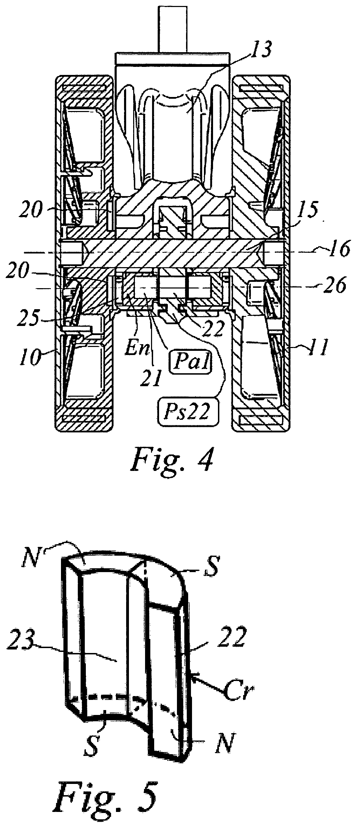

- Les figures 2 à 5 représentent un mode de réalisation industriel d'une roulette à deux roues selon l'invention en accord avec la représentation de la figure 1, la figure 2 étant une vue de côté de cette roulette, la figure 3 étant une vue en coupe axiale de cette roulette en configuration de blocage, la figure 4 étant une vue en coupe axiale de la roulette dans sa configuration dans laquelle elle n'est pas bloquée, et la figure 5 étant une vue en perspective cavalière d'un mode de réalisation avantageux d'un élément constitutif de la roulette selon l'invention.

Il est tout d'abord rappelé qu'un aimant présente toujours un pôle nord N qui peut être défini comme un pôle de signe positif, donc défini comme N/+, et un pôle sud S qui peut être défini comme un pôle de signe négatif, donc défini comme S/-. Il est également rappelé que, pour des aimants en regard l'un de l'autre, deux pôles de signes contraires s'attirent et deux pôles de même signe se repoussent.

### Description d'un mode de réalisation préféré de l'objet de l'invention.

En référence aux figures annexées, la présente invention concerne une roulette, pour meuble ou analogue, comportant au moins une roue 10, 11 (de préférence deux comme dans les modes de réalisation industriel selon les figures 2 à 4), un carter de roue 13, des moyens pour monter la roue en rotation par rapport au carter de roue, sur un arbre 15 définissant un axe de rotation 16, et des moyens de blocage commandables de la roue 10, 11 pour bloquer la roue par rapport au carter de roue 13.

Ces moyens de blocage commandables permettent à la roulette, et donc au meuble auquel elle est associée, de rester relativement fixe dans une position déterminée, en empêchant la roue (les roues) 10, 11 de pivoter par rapport au carter 13 et donc de rouler sur le sol.

Selon l'invention, les moyens de blocage commandables de la roue sont constitués par une pluralité d'encoches radiales 20 réalisées dans la roue 10, 11, de préférence sur sa face intérieure, à savoir celle qui est tournée vers le carter 13, un doigt 25 apte à plonger au moins partiellement dans au moins une encoche 20 de la pluralité, au moins un premier aimant 21 (donc avec deux pôles de signes opposés N/+, S/-), et des moyens pour solidariser le doigt 25 avec le premier aimant 21, sensiblement sur un des deux pôles N/+, S/-, le tout formant un ensemble aimant-doigt référencé En.

Les encoches sont réalisées de préférence sur la face intérieure de la roue autour de l'axe de rotation, en étoile selon des directions radiales, et espacées très préférentiellement régulièrement les unes des autres avec un pas le plus faible possible sans affaiblir la structure de la roue.

La roulette comporte en outre des moyens pour monter l'ensemble En en translation par rapport au carter de roue 13 selon une direction 26 sensiblement parallèle à l'axe de rotation 16, de façon que, dans une première position Pa1 de l'ensemble En, le doigt soit en dehors des encoches 20 et que, dans une seconde position Pa2 de cet ensemble En, ce doigt 25 soit enfiché au moins partiellement dans au moins une des encoches 20.

Pour des raisons de fiabilité, ce doigt 25 peut en effet être conformé de façon à présenter plusieurs excroissances qui sont aptes à plonger dans plusieurs encoches à la fois, par exemple contiguës, et donc de continuer à être fonctionnel si l'une de ces excroissances venait à être rompue.

Les moyens pour monter l'ensemble En librement en translation par rapport au carter de roue 13 peuvent être constitués de nombreuses façons. Ils seront cependant avantageusement et essentiellement constitués par un logement cylindrique 36 réalisé dans le carter 13 selon un axe confondu avec la direction 26 et ouvert à ses deux extrémités, comme illustré sur les figures 1 à 4. Ce logement cylindrique est cylindrique de révolution, ou non, selon la section transversale du premier aimant 21, bien qu'il soit préférable qu'ils soient tous deux cylindriques de révolution.

La roulette comporte aussi un deuxième aimant 22 et un troisième aimant 23, un support 30, des moyens pour monter ce deuxième aimant 22 et ce troisième aimant 23 tête-bêche dans le support 30, par exemple dans deux logements 122 et 123 comme visible sur la figure 2, de façon que, sur une même face de ce support, se présentent deux pôles de signes opposés N/+ et S/-, et des moyens pour déplacer le support dans un plan sensiblement perpendiculaire à l'axe de rotation 16 de façon à passer devant l'ouverture du logement cylindrique 36 qui est opposée à celle en regard de la roue 10, 11 et dans lequel est contenu le premier aimant 21, pour amener l'un ou l'autre des deuxième et troisième aimants 22, 23 en regard de ce premier aimant 21.

Le déplacement du support 30 permet à ce dernier de prendre au moins deux positions par rapport au premier aimant 21, i.e la position Ps23 montrée sur la figure 3 et la position Ps22 montrée sur la figure 4.

Dans le mode de réalisation illustré, la position Ps22 du support 30 est celle dans laquelle le pôle du deuxième aimant 22 qui a été amené en regard du pôle du premier aimant 21 sur lequel n'est pas fixé le doigt 25, est de signe opposé à celui de ce pôle du premier aimant 21 (la roue n'est pas bloquée par rapport au carter), et la position Ps23 du support 30 est celle dans laquelle le pôle du troisième aimant 23 qui a été amené en regard du pôle du premier aimant 21 sur lequel n'est pas fixé le doigt 25 est de même signe que celui de ce pôle du premier aimant 21 (la roue est bloquée par rapport au carter).

Selon un mode réalisation très préférentiel, les moyens pour déplacer le support 30 dans un plan sensiblement perpendiculaire à l'axe de rotation 16, sont des moyens pour l'entraîner en rotation autour d'un axe sensiblement confondu avec l'axe de rotation 16.

De façon avantageuse, ces moyens pour entraîner en rotation le support 30 autour d'un axe sensiblement confondu avec l'axe de rotation 16 comprennent une pièce dans laquelle est réalisé un palier 31 qui est monté rotatif sur l'arbre de rotation 15, et des moyens pour commander la rotation de cette pièce entre les deux positions Ps22 et Ps23.

Selon une réalisation avantageuse, notamment pour faciliter la fabrication de la pièce du support 30 et son assemblage, les deux logements 122 et 123 sont réalisés en un seul logement, le deuxième aimant 22 et le troisième aimant 23 étant alors par exemple conformés en deux secteurs de cylindre de révolution Cr juxtaposés l'un à côté de l'autre, figure 5.

Selon les applications de ces roulettes, notamment pour déplacer des meubles qui sont aptes à rouler sur un sol, les moyens pour commander la rotation de la pièce 30 sont constitués par une pédale 40 qui comporte une partie émergeant de l'encombrement des roues 10, 11, comme plus particulièrement visible sur la figure 2, pour pouvoir être actionnée, par exemple avec un pied.

Comme mentionné auparavant, la roulette comporte des moyens pour solidariser le doigt 25 avec le premier aimant 21 sensiblement sur un des deux pôles de ce premier aimant. Ces moyens de solidarisation du doigt avec le premier aimant sont par exemple constitués, figures 3 et 4, par un moulage du doigt sur le premier aimant 21, par exemple en une matière plastique ou analogue. Mais il est aussi possible que ces moyens pour solidariser le doigt 25 avec le premier aimant 21 soient constitués par le fait que le doigt et le premier aimant sont réalisés d'une seule pièce.

La roulette selon l'invention fonctionne de la façon suivante, en supposant, pour simplifier la présente description, que le premier aimant 21 est positionné de façon que son pôle S/- est celui qui est associé au doigt 25, et donc que son pôle N/+ est tourné vers le support 30, et que la roulette est tout d'abord en position de blocage. Pour débloquer la roulette, par exemple pour déplacer le meuble de quelque nature qu'il soit sur lequel elle est montée, il suffit d'actionner en rotation la pédale 40 pour que l'un des deuxième et troisième aimants 22, 23, par exemple le deuxième aimant 22, celui qui a son pôle S/- tourné vers la face du support 30 qui est tournée vers le premier aimant 21, soit amené en regard de l'ouverture du logement cylindrique 36 d'où peut éventuellement émerger, vers le support 30, le premier aimant 21 avec son pôle N/+.

Ces deux pôles de signes opposés s'attirent et, en glissant librement vers la droite par référence à la figure 1, le premier aimant 21 vient se coller contre le pôle S/- du deuxième aimant 22, et est maintenu dans cette position Pa1 tant que la pédale demeure dans la position Ps22.

Dans cette configuration, figure 4, le doigt 25 ne plonge dans aucune des encoches 20, ce qui permet à la roue (aux roues) 11, 12 de pivoter autour de l'axe de rotation 16 et à la roulette de rouler sur le sol et de déplacer le meuble.

Pour arrêter le déplacement du meuble, c'est-à-dire pour bloquer la rotation de la roue, il suffit d'actionner en rotation la pédale 40 dans le sens opposé à celui qui a permis le déblocage, de façon à amener le troisième aimant 23 en regard du premier aimant 21, de façon que son pôle N/+ se positionne devant le pôle N/+ de ce premier aimant. Les deux pôles étant de même signe, le premier aimant 21 est repoussé vers la gauche dans son logement, ce qui oblige le doigt 25 qui lui est associé à se loger au moins partiellement dans au moins une encoche 20. La roue ne peut plus pivoter par rapport au carter, la roulette ne peut plus rouler sur le sol et le meuble ne peut que rester en place.

Les descriptions ci-dessus de la structure de la roulette à blocage commandable selon l'invention et de son fonctionnement font apparaître de façon irréfutable tous les avantages de l'objet de l'invention.

## Revendications

1. Roulette avec blocage commandable comportant :
• au moins une roue (10, 11),
• un carter de roue (13),
• des moyens pour monter ladite roue en rotation par rapport au carter de roue sur un arbre (15) définissant un axe de rotation (16), et
• des moyens de blocage commandables de ladite roue (10, 11) pour commander le blocage de la roue par rapport au carter de roue (13),
**caractérisée par le fait que** les moyens de blocage commandables de la roue sont constitués par :
• une pluralité d'encoches radiales (20) réalisées dans ladite roue (10, 11),
• un doigt (25) apte à plonger dans au moins une encoche (20) de la pluralité,
• au moins un premier aimant (21) avec deux pôles de signes opposés (N/+, S/-),
• des moyens pour solidariser ledit doigt (25) avec ledit premier aimant (21), sensiblement sur un des deux pôles de ce premier aimant, le tout formant un ensemble aimant-doigt (En),
• des moyens pour monter ledit ensemble aimant-doigt (En) en translation par rapport au dit carter de roue (13) selon une direction (26) sensiblement parallèle audit axe de rotation (16), de façon que, dans une première position (P1) du dit ensemble (En), le doigt (25) soit en dehors des encoches (20) et que, dans une seconde position (P2) du dit ensemble (En), le doigt (25) soit enfiché au moins partiellement dans au moins une des encoches (20),
• un deuxième aimant (22) et un troisième aimant (23),
• un support (30),
• des moyens pour monter le deuxième aimant (22) et le troisième aimant (23) tête-bêche dans ledit support (30) de façon que, sur une même face dudit support, se présentent deux pôles de signes opposés, et
• des moyens pour déplacer ledit support (30) dans un plan sensiblement perpendiculaire audit axe de rotation (16) de façon à amener l'un ou l'autre des deuxième et troisième aimants (22, 23) en regard du premier aimant (21).

2. Roulette selon la revendication 1, **caractérisée par le fait que** les moyens pour déplacer ledit support (30) dans un plan sensiblement perpendiculaire audit axe de rotation (16), sont des moyens pour entraîner en rotation ledit support (30) autour d'un axe sensiblement confondu avec ledit axe de rotation (16).

3. Roulette selon la revendication 2, **caractérisée par le fait que** les moyens pour entraîner en rotation ledit support (30) autour d'un axe sensiblement confondu avec ledit axe de rotation (16) comprennent une pièce dans laquelle est réalisé un palier (31), ledit palier étant monté rotatif sur ledit arbre de rotation (15), et des moyens pour commander la rotation de ladite pièce.

4. Roulette selon la revendication 3, **caractérisée par le fait que** les deuxième aimant (22) et troisième aimant (23) sont conformés en secteurs de cylindre de révolution (Cr) juxtaposés l'un à côté de l'autre.

5. Roulette selon l'une des revendications 3 et 4, **caractérisée par le fait que** les moyens pour commander la rotation de ladite pièce (30) sont constitués par une pédale (40).

6. Roulette selon l'une des revendications précédentes, **caractérisée par le fait que** les moyens pour solidariser ledit doigt (25) avec ledit premier aimant (21) sensiblement sur un des deux pôles sont constitués par un moulage du dit doigt sur ledit premier aimant (21).

7. Roulette selon l'une des revendications précédentes 1 à 5, **caractérisée par le fait que** les moyens pour solidariser ledit doigt (25) avec ledit premier aimant (21) sensiblement sur un des deux pôles sont constitués **par le fait que** ce doigt et ce premier aimant sont réalisés d'une seule pièce.

8. Roulette selon l'une des revendications précédentes, **caractérisée par le fait que** les moyens pour monter ledit ensemble aimant-doigt (En) en translation par rapport au carter de roue (13) selon une direction (26) sensiblement parallèle à l'axe de rotation (16) sont constitués par un logement cylindrique (36) réalisé dans le carter selon un axe confondu avec ladite direction (26), ce dit logement étant ouvert à ses deux extrémités.

9. Roulette selon l'une de revendications précédentes, **caractérisée par le fait que** le doigt (25) comporte plusieurs excroissances aptes à plonger dans plusieurs encoches à la fois.

## Patentansprüche

1. Rolle mit steuerbarer Blockierung, umfassend:
- mindestens ein Rad (10, 11),
- ein Radgehäuse (13),
- Mittel zur drehbaren Befestigung des Rades in Bezug auf das Radgehäuse auf einer Welle (15), die eine Drehachse (16) definiert, und
- steuerbare Blockiermittel des Rades (10, 11) zum Steuern der Blockierung des Rades in Bezug auf das Radgehäuse (13),
**dadurch gekennzeichnet, dass** die steuerbaren Blockiermittel des Rades gebildet sind durch:
- mehrere radiale Ausschnitte (20), die in dem Rad (10, 11) ausgebildet sind,
- eine Klinke (25), die in mindestens eine der mehreren Ausschnitte (20) eintauchen kann,
- mindestens einen ersten Magneten (21) mit zwei Polen mit entgegengesetzten Vorzeichen (N/+, S/-),
- Mittel zum Befestigen der Klinke (25) an dem ersten Magneten (21) im Wesentlichen an einem der beiden Pole dieses ersten Magneten, wobei das Ganze eine Magnet-Klinke-Einheit (En) bildet,
- Mittel zum Montieren der Magnet-Klinke-Einheit (En) translatorisch in Bezug auf das Radgehäuse (13) längs einer zu der Drehachse (16) im Wesentlichen parallelen Richtung, derart, dass sich die Klinke (25) in einer ersten Position (P1) der Einheit (En) außerhalb der Ausschnitte (20) befindet und dass die Klinke (25) in einer zweiten Position (P2) der Einheit (En) in mindestens eine der Ausschnitte (20) zumindest teilweise eingesteckt ist,
- einen zweiten Magneten (22) und einen dritten Magneten (23),
- einen Lagerbock (30),
- Mittel zum entgegengesetzten Montieren des zweiten Magneten (22) und des dritten Magneten (23) an dem Lagerbock (30), derart, dass auf derselben Seite des Lagerbocks zwei Pole mit entgegengesetzten Vorzeichen vorhanden sind, und
- Mittel zum Verlagern des Lagerbocks (30) in einer zu der Drehachse (16) im Wesentlichen senkrechten Ebene, derart, dass der eine oder der andere des zweiten und des dritten Magneten (22, 23) gegenüber dem ersten Magneten (21) angeordnet wird.

2. Rolle nach Anspruch 1, **dadurch gekennzeichnet, dass** die Mittel zum Verlagern des Lagerbocks (30) in einer zu der Drehachse (16) im Wesentlichen senkrechten Ebene Mittel sind, um den Lagerbock (30) um eine Achse, die mit der Drehachse (16) im Wesentlichen zusammenfällt, rotatorisch anzutreiben.

3. Rolle nach Anspruch 2, **dadurch gekennzeichnet, dass** die Mittel zum rotatorischen Antreiben des Lagerbocks (30) um eine Achse, die mit der Drehachse (16) im Wesentlichen zusammenfällt, ein Teil, in dem ein Lager (31) ausgebildet ist, wobei das Lager auf der Drehwelle (15) drehbar montiert ist, und Mittel zum Steuern der Drehung des Teils umfassen.

4. Rolle nach Anspruch 3, **dadurch gekennzeichnet, dass** der zweite Magnet (22) und der dritte Magnet (23) in Form von nebeneinanderliegenden Sektoren (Cr) eines rotationssymmetrischen Zylinders ausgebildet sind.

5. Rolle nach einem der Ansprüche 3 und 4, **dadurch gekennzeichnet, dass** die Mittel zum Steuern der Drehung des Teils (30) durch ein Pedal (40) gebildet sind.

6. Rolle nach einem der vorhergehenden Ansprüche, **dadurch gekennzeichnet, dass** die Mittel zum Befestigen der Klinke (25) an dem ersten Magneten (21) im Wesentlichen an einem der beiden Pole im Wesentlichen durch Anformen der Klinke an dem ersten Magneten (21) gebildet sind.

7. Rolle nach einem der vorhergehenden Ansprüche 1 bis 5, **dadurch gekennzeichnet, dass** die Mittel zum Befestigen der Klinke (25) an dem ersten Magneten (21) im Wesentlichen an einem der beiden Pole dadurch gebildet sind, dass diese Klinke und dieser erste Magnet einteilig ausgebildet sind.

8. Rolle nach einem der vorhergehenden Ansprüche, **dadurch gekennzeichnet, dass** die Mittel zum Montieren der Magnet-Klinke-Einheit (En) translatorisch in Bezug auf das Radgehäuse (13) längs einer zu der Drehachse (16) im Wesentlichen parallelen Richtung (26) durch einen zylindrischen Aufnahmeraum (36) gebildet sind, der in dem Gehäuse längs einer Achse, die mit dieser Richtung (26) zusammenfällt, ausgebildet ist, wobei dieser Aufnahmeraum an seinen beiden Enden offen ist.

9. Rolle nach einem der vorhergehenden Ansprüche, **dadurch gekennzeichnet, dass** die Klinke (25) mehrere Erhebungen aufweist, die in mehrere Ausschnitte gleichzeitig eintauchen können.

## Claims

1. Caster with controllable locking comprising:
• at least one wheel (10, 11),
• a wheel case (13),
• means for mounting said wheel in rotation with respect to the wheel case on a shaft (15) defining an axis of rotation (16), and
• means for controllably locking said wheel (10, 11) to control the locking of the wheel with respect to the wheel case (13),
**characterised in that** the controllable locking means of the wheel are constituted by:
• a plurality of radial notches (20) made in said wheel (10, 11),
• a finger (25) capable of introducing in at least one notch (20) of the plurality,
• at least one first magnet (21) with two poles of opposite signs (N/+, S/-),
• means for securing said finger (25) with said first magnet (21), substantially on one of the two poles of this first magnet, it all forming a magnet/finger assembly (En),
• means for mounting said magnet/finger assembly (En) in translation with respect to said wheel case (13) in a direction (26) substantially parallel to said axis of rotation (16), such that, in a first position (P1) if said assembly (En), the finger (25) is outside of the notches (20) and that, in a second position (P2) of said assembly (En), the finger (25) is inserted at least partially in at least one of the notches (20),
• a second magnet (22) and a third magnet (23),
• a support (30),
• means for mounting the second magnet (22) and the third magnet (23) head-to-tail in said support (30) such that, on one same face of said support, two poles of opposite signs are presented, and
• means for moving said support (30) in a plane substantially perpendicular to said axis of rotation (16) so as to bring either of the second and third magnets (22, 23) facing the first magnet (21).

2. Caster according to claim 1, **characterised in that** the means for moving said support (30) in a plane substantially perpendicular to said axis of rotation (16), are means for rotating said support (30) about an axis substantially merged with said axis of rotation (16).

3. Caster according to claim 2, **characterised in that** the means for rotating said support (30) about an axis substantially merged with said axis of rotation (16) comprise a part in which a bearing (31) is made, said bearing being rotatably mounted on said rotary shaft (15), and means for controlling the rotation of said part.

4. Caster according to claim 3, **characterised in that** the second magnet (22) and third magnet (23) are shaped into revolving cylinder sectors (Cr) juxtaposed side-by-side one another.

5. Caster according to one of claims 3 and 4, **characterised in that** the means for controlling the rotation of said part (30) are constituted by a pedal (40).

6. Caster according to one of the preceding claims, **characterised in that** the means for securing said finger (25) with said first magnet (21) substantially on one of the two poles are constituted by a moulding of said finger on said first magnet (21).

7. Caster according to one of the preceding claims 1 to 5, **characterised in that** the means for securing said finger (25) with said first magnet (21) substantially on one of the two poles are constituted **in that** this finger and this first magnet are made as single part.

8. Caster according to one of the preceding claims, **characterised in that** the means for mounting said magnet/finger assembly (En) in translation with respect to the wheel case (13) in a direction (26) substantially parallel to the axis of rotation (16) are constituted by a cylindrical housing (36) made in the case about an axis merged with said direction (26), this said housing being open at its two ends.

9. Caster according to one of the preceding claims, **characterised in that** the finger (25) comprises several excrescences capable of introducing in several notches simultaneously.
